# EUROPEAN PATENT SPECIFICATION

(11) **EP 1 122 131 B1**
(45) Date of publication and mention of the grant of the patent: **11.08.2004**
(21) Application number: 01101860.3
(22) Date of filing: 04.12.1996
(51) Int. Cl.: B60R 13/10, B44C 1/16

(54) **Production of vehicle registration number plates**
Herstellung von Kennzeichenschildern für Fahrzeuge
Production de plaques d'immatriculation pour véhicules

(30) Priority: 04.12.1995 GB 9524771
(43) Date of publication of application: 08.08.2001
(62) Divisional of application: 96308772.1
(73) Proprietor: STATEFRESH Ltd., London NW2 7JJ (GB)
(72) Inventor: Livingstone, Peter John, Concept Automation Ltd., Slough, Berkshire SL1 4LP (GB)
(74) Representative: Howson, Richard G.B.

(56) References cited:
- EP-A- 0 613 804
- CA-A- 2 076 582
- GB-A- 2 187 023
- GB-A- 2 301 693

## Description

This invention relates to production of vehicle registration number plates, the number plates being of the kind which comprise a laminate comprising a transparent plate to which is bonded face to face a film on which the number is depicted such that that number can be read through the transparent plate. Such vehicle registration number plates are referred to as "a vehicle registration number plate of the kind referred to" in the remainder of this description.

If the film on which the number is depicted is drawn from endless stock and the transparent plate is placed over the number depicted on the film and the two are bonded together, the resultant laminate then has to be severed from the endless stock. Even if the widths of the film and of the transparent plate are the same, it is necessary to trim the film at the end of the plate to remove unsightly projecting portions of the film. If this is done by hand it is time consuming and labour intensive.

EP-A-0 613 804 discloses a process according to the preamble of claim 1.

An object of this invention is to provide a process for forming vehicle registration number plates of the kind referred to above which does not require them to be trimmed by hand after they are severed from stock of the film on which the numbers are depicted.

The invention provides a process as defined in claim 1.

In order that the invention may be well understood, an embodiment thereof, which is given by way of example only, will now be described with reference to the drawings in which:
Fig. 1 is a schematic diagram of apparatus for processing a continuous strip of film with a series of printed vehicle registration numbers thereon prior to bonding of that film to a transparent plate to form the number plate;
Fig. 2 is a plan view of a wood rule cutting die incorporated in the apparatus shown in Fig. 1;
Fig. 3 illustrates a length of plastic film with a series of exemplary vehicle registration numbers printed thereon, after it has been processed by the apparatus shown in Figs. 1 and 2; and
Fig. 4 is a schematic diagram of apparatus for carrying out a process that embodies the invention.

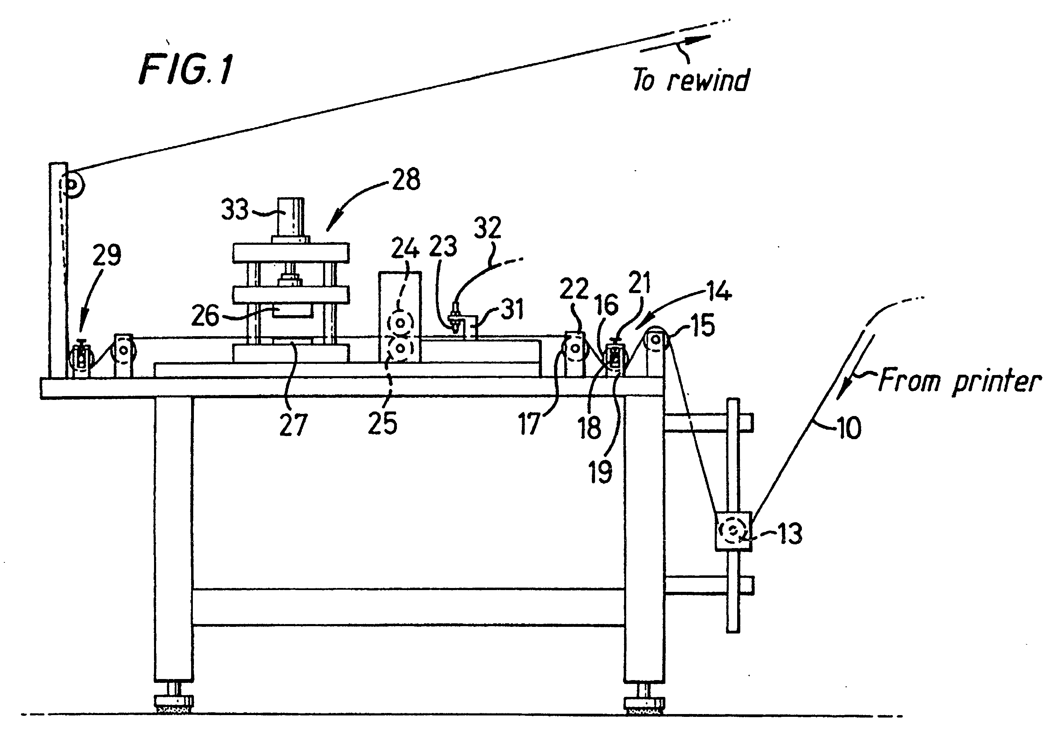

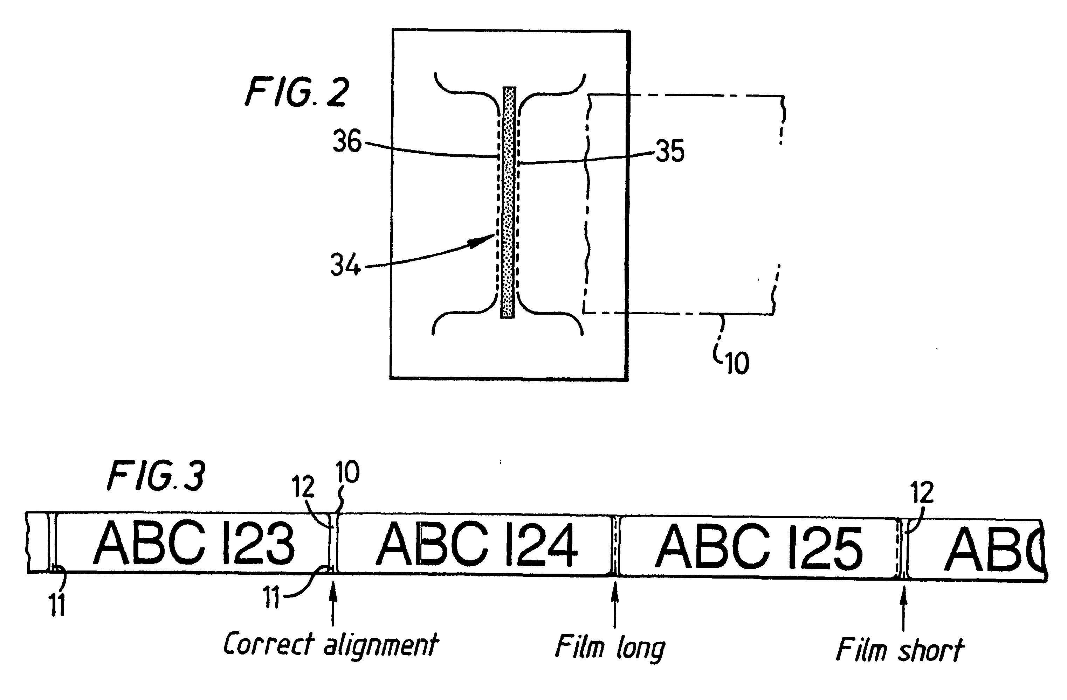

Figures 1 and 2 do not illustrate embodiments of the invention.

Figure 1 shows a continuous strip 10 of reflective plastic film which is drawn continuously from a printer (not shown). The printer is computer controlled and is operable to print on the reflective surface of the plastic film, a series of vehicle registration numbers of which an example is shown in Figure 3. The printer is also arranged to print a series of marks 11 at spaced intervals along one edge of the strip 10. The vehicle registration numbers are printed at a pitch which is the sum of the standard vehicle registration number plate length (eg. 520 mm) plus a certain spacing (say 5 mm) between successive number plate lengths. The marks 11 are printed at the same pitch but so that they are positioned substantially mid-way between successive registration numbers and in the certain spacing 12. The numbers that are printed are selected by operation of the computer control of the printer.

The reflective plastic film has a layer of adhesive applied to its printed surface after it emerges from the printer by operation of an adhesive transfer system (not shown). This adhesive transfer system involves separating carrier tape from a laminate in which the adhesive to be applied to the printed surface of the reflective plastic film is sandwiched between the carrier tape and a peel-off plastic film, and applying the adhesive layer, with the peel-off plastic film adhering to it, to the printed surface of the reflective film so that the adhesive is sandwiched between the printed reflective film and the peel-off film. The continuous strip 10 is the result.

Figure 1 shows the continuous strip 10 is fed around a counter balanced floating roller 13 at the input end of the apparatus shown. The counter balanced floating roller 13 provides compensation for different speeds of operation of the printer on one hand and the apparatus shown in Figure 1 on the other hand.

Having been passed round the counter balanced floating roller 13, the continuous strip 10 is fed through a film tracking assembly 14. The film tracking assembly 14 comprises an input roller 15, a vertically adjustable roller 16 and an adjustable tracking guide 17. The vertically adjustable roller is journalled on an axle 18 which is mounted in supports 19 at either end. The height of the axle 18 in either support 19 is adjustable by a respective screw 21.

The adjustable tracking guide 17 comprises a roller with an axially spaced pair of annular flanges, the spacing between the flanges being substantially equal to the width of the strip 10. The roller is journalled in a support 22 at either end and is provided with rotary means whereby the position of the roller, and thus of the annular flanges, between the two vertical supports 22 is adjustable laterally. The strip 10 is passed over the roller between the pair of lateral flanges.

Strip 10 emerging from the film tracking assembly 14 is fed under an optical sensor 23, between a pair of nip rolls 24 and 25 and between the platens 26 and 27 of an electrically actuated pneumatic press 28 to another film tracking assembly 29 which is similar to the assembly 14.

The optical sensor 23 is supported by a support 31 above the edge of the strip 10 on which the marks 11 are printed so that those marks pass through its field of view. The output 32 of the sensor 23 is connected to an intelligent stepper motor controller (not shown). The stepper motor (not shown) controlled by that intelligent stepper motor controller is operable to drive a powered one of the pair of nip rolls 24 and 25. It is also operable to control the pneumatic cylinder 33 of the press 28.

A wood rule cutting die 34 (see Figure 2) is mounted on the lower platen 27 of the press 28. It comprises a spaced pair of cutters 35 and 36 which are a mirror image one of the other. Each cutter 35, 36 comprises a straight mid-portion which is in the form of a comb, the upper edges of the prongs of that mid-portion forming spaced cutting edges. At either end of each mid-portion of each cutter 35 and 36, there is an S-shaped continuous cutting edge, the two S-shaped continuous cutting edges at either end of the cutters 35 and 36 diverging as can be seen from Figure 2. The space between the two mid-portions of the cutters 35 and 36 is filled with rubber 34A to a level just above the cutting edges of the prongs. The upper and lower platens 26 and 27 carry cooperating stops which limit the travel of the platens towards one another. The upper platen carries a pad of elastomeric material on its top surface to buffer contact with other structure of the press above it. The arrangement is such that the wood rule cutting die 34 effects a kiss cut on the strip 10 between the two platens 26 and 27, but does not fully perforate the peel-off plastic film which is a protective layer protecting the adhesive layer which is on the upper side of the strip 10. The peel-off plastic film serves as a cutting matrix. The rubber between the mid-portions of the two cutters 35 and 36 serves to ensure release of the strip 10 from the cutters when the press 28 is re-opened.

The intelligent stepper motor controller controls operation of the apparatus shown in Figure 1.

It controls the stepper motor which drives the nip rollers 24 and 25 to feed the strip 10 between the platens 26 and 27 of the press 28 as follows. Initially the strip 10 is fed through at high speed, the sensor 23 being deactivated. This fast phase is continued until shortly before (say 10 mm) the next printed mark 11 enters the field of view of the sensor 23. In practice the strip 10 is traversed passed the sensor 23 for about the length of a number plate, that is to say about 520 mm during this fast phase.

At the end of the fast phase, the intelligent controller instructs the stepper motor to drive the strip 10 at a slow speed or creep and also activates the sensor 23 during this creep phase. The sensor 23 emits a signal to the intelligent stepper motor controller in reaction to sensing the arrival of the mark 11 in its field of view. The intelligent stepper motor controller reacts to receipt of that signal from the sensor 23 to index the strip 10 a predetermined distance (about 20 mm) after detection of the mark 11 by the sensor 23 whereafter it stops the stepper motor so that the strip 10 is stopped between the platens 26 and 27 of the press 28. The intelligent stepper motor controller then actuates the electrical power unit of the press 28 to actuate the press 28 and kiss cut the laminate as described.

The resultant cut in the printed film, but not in the peel off plastic film which protects the adhesive layer and serves as the cutting matrix, will comprise spaced lateral lines of perforations extending from side to side of the strip 10 with arcuate continuous cuts at either end, those arcuate cuts conforming to the corners of the proposed numbered plate.

On re-opening of the press 28, the strip 10 is released from the wood rule cutting die 34 by the action of the rubber between the two mid-portions of the cutters 35 and 36. Whereafter the cycle is repeated.

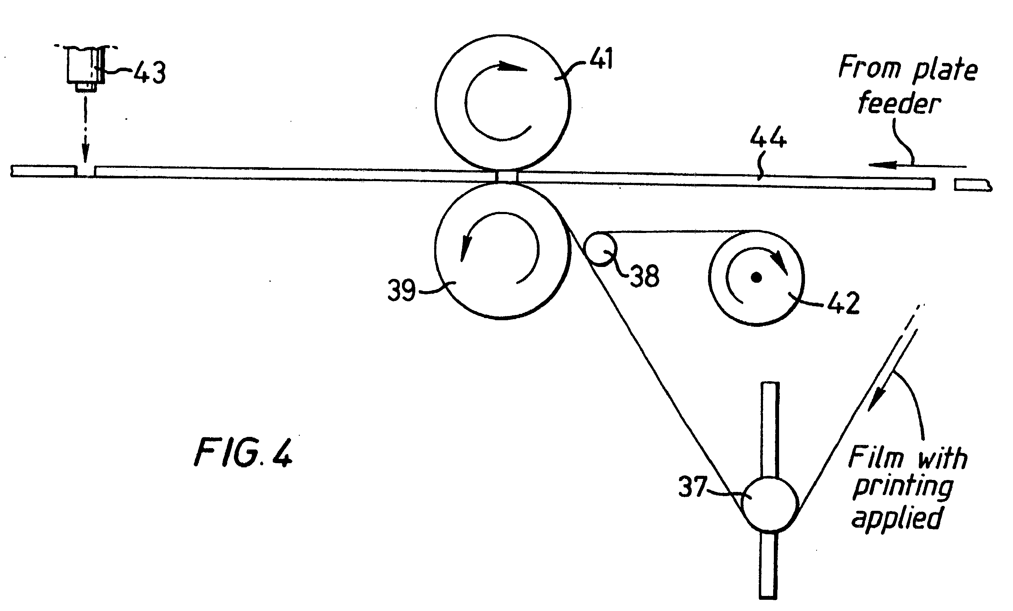

Figure 4 shows apparatus for bonding a transparent plastics plate 44 to the area of the strip 10 on which a vehicle registration number is printed and which is enclosed between successive kiss cuts formed on either side of that printed number by successive operations of the press 28. That area substantially corresponds to the area of the transparent plastics plate 44 which forms a structural element of the number plate and which is to be bonded to the adhesive coated printed surface so that the number can be viewed through the plastic plate 44.

Figure 1 shows the strip 10 that is drawn from the press being lead to a rewind roller which is not shown. In an alternative arrangement the strip 10 that is drawn from the downstream tracking unit 29 of the apparatus shown in Figure 1 could be fed directly to the apparatus shown in Figure 4.

Either way the film 10 that is introduced into the apparatus shown in Figure 4 is fed round a counter balanced floating roller 37 which is similar to the counter balanced floating roller 13 of the apparatus disclosed above and shown in Figure 1. This floating roller serves to allow for the different speeds at which the film 10 will be drawn through the press 28 on the one hand and through the apparatus shown in Figure 4 on the other hand when the apparatus shown in Figure 4 is part of a continuous process including the apparatus shown in Figure 1.

The strip 10 that emerges from the floating roller 37 is lead past a take off roller 38 and over the lower of a spaced pair of nip rollers 39 and 41. The peel-off plastic film is peeled off the adhesive coated printed surface of the strip 10 and led around the take off roller 38 to a rewind reel 42. Hence the continuous strip 10 that is fed between the spaced nip rollers 39 and 41 comprises the printed reflective plastic with its adhesive coating exposed and facing the upper roller 41.

The strip 10 that is led between the spaced rollers 39 and 41 is led past a second sensor 43 which is arranged to detect the passage of the marks 11 in a similar manner to that described above for the sensor 23 in the apparatus of Figure 1.

A stack of the transparent plates 44 that are to be bonded to the printed reflective plastic to form the number plate is provided. Means are provided are for feeding a plate 44 from the top of the stack into the space between the nip rollers 39 and 41.

The sensor 43 is located downstream of the rollers 41 and 42 such that, when a mark 11 is directly below it, a full length of one number plate is between it and the exit of the space between the two rollers 39 and 41, as shown in Figure 4, and such that the leading edge of the next portion of the strip 10, on which a vehicle registration number is printed and to which another plate 44 is to be bonded in registry with the respective printed number and the perforations at either end of that length of strip 10, is in the entrance of the space between the rollers 39 and 41.

In operation, the strip 10 is halted when the sensor 43 detects the presence of a mark 11 below it. The next plate from the stack is fed into the gap between the rollers 39 and 41 as shown in Figure 4. This ensures that the front edge of that plate 44 is correctly aligned with the perforations at the front of the area of the strip 10 on which the respective vehicle registration number is printed. Entry of this plate 44 into the nip of the rollers 39 and 41 initiates rotation of the driven one of those rollers 39 and 41 to index that plate 44 and the respective portion of the strip 10 together between those rollers 39 and 41 whereby the latter is bonded to the former by being passed between those rollers 39 and 41. The strip 10 is indexed forwards until the next mark is detected by the sensor 43 which detection initiates stopping the strip 10 at which point the laminate comprising the printed length of reflective plastic with a vehicle registration number printed thereon and the transparent plate 44 will be just emerging from the nip between the rollers 39 and 41. The process is then repeated.

The number plates can be separated from the strip 10 by being pulled by a faster nip roller assembly (not shown) so that the perforations at either end are separated or torn along the lines of weakening formed by those perforations and the arcuate cuts at either end.

It will be understood that Figures 1 to 4 disclose a process for the production of vehicle registration number plates in which a continuous strip of a laminate comprising a film having a surface on which a series of vehicle registration numbers is depicted, a layer of adhesive with which said surface is coated and a protective strip which adheres face to face with said adhesive such that it can be peeled off to expose the adhesive is used. The laminate is punched from the side of the film opposite the adhesive coated surface to weaken that film along lines on either side of a vehicle registration number depicted on that film, the lines of weakening being such that the profile of the area of the film they encompass corresponds to the profile of the transparent plate to which that portion of the film with the number depicted thereon is to be bonded face to face to form the number plate. The arrangement being is such that, once the protective strip has been peeled off and the transparent plate has been presented to the exposed adhesive coated surface of said area in registry therewith and bonded thereto, the portion of the film that is bonded to the transparent plate can be torn from the remainder of the film along the lines of weakening so that there is no need for further trimming of the film at the periphery of the number plate.

The series of vehicle registration numbers are depicted on the film with the pitch between successive numbers being the length of a number plate plus an additional amount such that there will be a gap in the film between the weakening line at the rear of the area of film around a first number depicted on the film and the weakening line at the front of the area of film around the next number of the series of numbers depicted on the film. This caters for tolerances in the transparent plates and for stretching of the film.

Each line of weakening comprises a line of perforations formed in the film and the ends of each line of weakening which will be in registry with the corners of the number plate that is to be bonded to that area of the film, are formed by a continuous cut through the film.

The perforations and continuous cuts are formed in the film without severing the contiguous protective layer which serves as a cutting matrix.

A reaction member of resilient material is provided on the side of the laminate that comprises the protective strip to provide a resilient reaction to the punch action by which the perforations and continuous cuts are formed in the film.

Figures 1 to 4 also disclose a process for the production of vehicle registration number plates in which a continuous strip comprising a film having a surface on which a series of vehicle registration numbers is depicted and which is coated with an exposed adhesive has a respective transparent plate placed over each of the numbers and bonded thereto face to face. The continuous strip is passed between a pair of rollers with clearance between said adhesive coated surface and the facing one of the rollers and roller passage of the series of numbers through the rollers is monitored. The film is stopped each time a number of the series reaches a certain location relative to the rollers and the respective transparent plate is advanced towards the rollers whilst the film is stationary. The plate is advanced along a path which will lead to it being fed through the rollers in face to face contact with the adhesive coated surface of the strip of film when movement along that path is continued, the certain location and the dimensions of the plate being such that the plate is in registry with the respective number at that location when the plate reaches the rollers. Arrival of the plate into registry with the respective number is arranged to initiate further movement of the film between the rollers so that the film and the plate are passed together through the rollers and bonded face to face thereby.

The progress of the series of vehicle registration numbers between the rollers is monitored by optical sensing means which sense passage past them of a series of certain marks on the printed surface, those marks being in the same sequence as the series of numbers on the surface. The optical sensing means interactively associated with driving means operable to drive the continuous strip between the rollers whereby to actuate stopping of the continuous strip when a respective mark is sensed.

Figure 1 shows an apparatus having punching means arranged such that a continuous strip of a laminate comprising a film having a surface on which a series of vehicle registration numbers are depicted, a layer of adhesive with which said surface is coated and a protective strip which adheres face to face with said adhesive such that it can be peeled off to expose the adhesive can be punched from the side of the film opposite the adhesive coated surface to weaken that film along lines on either side of a vehicle registration number depicted on that film. The lines of weakening are positioned that the profile of the area of the film they encompass corresponds to the profile of a transparent plate to which that portion of the film with the number depicted thereon is to be bonded face to face to form the number plate. The arrangement is such that, once the protective strip has been peeled off and the transparent plate has been presented to the exposed adhesive coated surface of said area in registry therewith and bonded thereto, the portion of the film that is bonded to the transparent plate can be torn from the remainder of the film along the lines of weakening so that there is no need for further trimming of the film at the periphery of the number plate.

Figures 4 shows apparatus for carrying out a process for the production of vehicle registration number plates. The apparatus comprises a pair of rollers, and means for passing a continuous strip, which comprises a film having a surface on which a series of vehicle registration numbers is depicted and which is coated with an exposed adhesive, between the pair of rollers with clearance between the adhesive coated surface and the facing one of the rollers. The apparatus also comprises means for monitoring passage of the series of registration numbers through the rollers, means for stopping the film each time a number of the series reaches a certain location relative to the rollers and means operable whilst the film is stationary to advance a transparent plate towards the rollers along a path which will lead to it being fed through the rollers in face to face contact with the adhesive coated surface of the strip of film when movement along that path is continued. The aforesaid location and the dimensions of the plate are such that the plate is in registry with the respective number at that location when the plate reaches the rollers. The apparatus also comprises means responsive to arrival of the plate into registry with the respective number and operable in response to such arrival to initiate further movement of the film between the rollers so that the film and the plate are passed together through the rollers and bonded face to face thereby.

The apparatus shown in Figures 1 and 4 can be linked to form a part of a continuous production line which comprises a printer that is operable to print a series of vehicle registration numbers on a film and adhesive transfer means operable to apply a layer of adhesive to the printed surface of the film with a protective strip which adheres face to face with said adhesive such that it can be peeled off to expose the adhesive. In operation of this production the combination of film and protective strip is punched from the side of the film opposite the adhesive coated surface to weaken that film along the lines on either side of a vehicle registration number depicted on that film. A transparent plate is presented to the exposed adhesive coated surface of said area in registry therewith and bonded thereto. After the film was weakened along said lines on either side of the vehicle registration number and before the portion of the film with the transparent plate bonded to it is severed from the remainder of the film along the lines of weakening.

## Claims

1. A process for the production of vehicle registration number plates which comprise a transparent plate bonded face to face with a surface of a film on which a vehicle registration number is depicted, said process comprising (i) presenting a said transparent plate (44) to a surface of a continuous strip (10) of a film on which surface a vehicle registration number is depicted, said surface having an adhesive applied thereto, **characterised by** said film having lines of weakening arranged to encompass an area of film on which said registration number is depicted and which area has a profile corresponding to the profile of the transparent plate, said plate being applied to said surface in registry with said area of film so as to be bonded thereto by said adhesive, and (ii) separating said area of film with said transparent plate bonded thereto from the remainder of the film along the lines of weakening, the arrangement being such that there is no need for further trimming of the film at the periphery of the number plate.

## Patentansprüche

1. Verfahren für die Herstellung von Fahrzeugkennzeichennummernschildern, die eine transparente Platte enthalten, die Seite an Seite mit einer Filmoberfläche verbunden ist, an welcher eine Fahrzeugkennzeichennummer dargestellt ist, welches Verfahren enthält (i) Präsentieren einer solchen transparenten Platte (44) zu einer Oberfläche eines kontinuierlichen Filmstreifens (10), an welcher Oberfläche eine Fahrzeugkennzeichennummer dargestellt ist, wobei die Oberfläche ein Adhäsiv daran angebracht hat, **dadurch gekennzeichnet, dass** der Film Schwächungslinien hat, die angeordnet sind, um einen Filmbereich zu umgeben, an welchem die Kennzeichennummer dargestellt ist, und welcher Bereich ein Profil entsprechend dem Profil der transparenten Platte hat, welche Platte an der Oberfläche in Ausrichtung mit dem Filmbereich aufgebracht wird, um damit durch das Adhäsiv verbunden zu werden, und (ii) Separieren des Filmbereichs mit der damit verbundenen transparenten Platte vom Rest des Films längs der Schwächungslinien, wobei die Anordnung derart ist, dass es kein Erfordernis zum weiteren Trimmen des Films an dem Umfang der Nummernplatte gibt.

## Revendications

1. Un procédé pour la production de plaques d'immatriculation pour véhicules qui comprend une plaque transparente reliée face à face à la surface d'un film sur lequel est représenté un numéro d'immatriculation de véhicule, ledit procédé comprenant les étapes consistant à (i) présenter ladite plaque transparente (44) à la surface d'une bande continue (10) d'un film sur la surface duquel est représenté un numéro d'immatriculation, ladite surface comportant un adhésif appliqué sur celle-ci, **caractérisé par le fait que** ledit film présente des lignes de moindre résistance disposées pour entourer une zone de film sur laquelle est représenté ledit numéro d'immatriculation, zone qui présente un profil correspondant au profil de la plaque transparente, ladite plaque étant appliquée à ladite surface en correspondance avec ladite zone de film de manière à être reliée à celle-ci par ledit adhésif, et (ii) séparer ladite zone de film, avec ladite plaque transparente qui lui est reliée, du reste du film le long des lignes de moindre résistance, la disposition étant telle qu'il n'est pas nécessaire d'effectuer une opération supplémentaire d'ébarbage du film à la périphérie de la plaque d'immatriculation.
